# EUROPÄISCHE PATENTANMELDUNG

(11) **EP 2 098 925 A1**
(43) Veröffentlichungstag der Anmeldung: **09.09.2009**
(21) Anmeldenummer: 08102395.4
(22) Anmeldetag: 07.03.2008
(51) Int. Cl.: G05B 19/042, G06F 9/44

(54) **Verfahren und Vorrichtung zum Programmieren und/oder Konfigurieren einer Sicherheitssteuerung**

(71) Anmelder: SICK AG, 79183 Waldkirch (DE)
(72) Erfinder: Weddingfeld, Klaus, 79183 Waldkirch (DE); Moddemann, Jörg, 79350 Sexau (DE)
(74) Vertreter: Hehl, Ulrich

(57) **Zusammenfassung**

Es wird ein Verfahren zum Programmieren und/oder Konfigurieren einer Sicherheitssteuerung (10) mit einer Steuerung (14) und mindestens einem Anschlussmodul (16) angegeben, welches zumindest einen Eingang (18) für einen Sensor (20) und/oder zumindest einen Ausgang (22) für einen Aktor (24) aufweist, wobei über eine grafische Benutzeroberfläche an die Sicherheitssteuerung (10) anzuschließende Sensoren (20) und/oder Aktoren (24) repräsentierende Elemente ausgewählt werden. Dabei werden neue Elemente für weitere anschließbare Sensoren (20) und/oder Aktoren (24) erzeugt und für die neuen Elemente wird festgelegt, welche Eigenschaften ihnen zugewiesen werden können, wobei die neuen Elemente nach ihrer Erzeugung in der grafischen Benutzeroberfläche für das Programmieren und/oder Konfigurieren der von ihnen repräsentierten Sensoren (20) und/oder Aktoren (24) zur Auswahl stehen.

## Beschreibung

Die Erfindung betrifft ein Verfahren zum Programmieren und/oder Konfigurieren einer Sicherheitssteuerung nach dem Oberbegriff von Anspruch 1 sowie eine Vorrichtung zur Durchführung des Verfahrens gemäß Anspruch 9.

Sicherheitssteuerungen dienen unter anderem dazu, bei Anliegen eines Gefahrensignals fehlerfrei auf eine vorgegebene Art zu reagieren. Eine typische Anwendung der Sicherheitstechnik ist die Absicherung gefährlicher Maschinen, wie etwa Pressen oder Roboter, die sofort abgeschaltet oder abgesichert werden müssen, wenn sich Bedienpersonal in unerlaubter Weise nähert. Dazu ist ein Sensor vorgesehen, der die Annäherung erkennt, wie etwa ein Lichtgitter oder eine Sicherheitskamera. Erkennt ein solcher Sensor eine Gefährdung, so muss eine mit dem Sensor verbundene Sicherheitssteuerung absolut zuverlässig ein Abschaltsignal generieren.

In der Praxis überwacht zumeist nicht ein einzelner Sensor eine einzelne Maschine, sondern es müssen eine ganze Reihe von Gefährdungsquellen überwacht werden. Die entsprechende Vielzahl zugehöriger Sensoren, die jeweils ein Schaltereignis definieren können und geeigneter Maßnahmen zur Beseitigung von Gefährdungen muss dann in der Sicherheitssteuerung konfiguriert und verschaltet werden. Dabei ist eine fehlerfreie Konfiguration und Programmierung besonders wichtig, da sonst die Anlage nicht als sicher zertifiziert wird und damit nicht oder nur eingeschränkt eingesetzt werden kann.

Aus der EP 1 362 269 B1 ist ein Programmierverfahren bekannt, bei dem Eingänge, logische Verarbeitungsregeln und Ausgänge für eine Sicherheitssteuerung konfiguriert und ein Programm für den Betrieb einer Sicherheitssteuerung mit den konfigurierten Elementen zusammengestellt wird. Bei diesem Verfahren wird aber die physische Anordnung und Verdrahtung der Elemente nicht dargestellt, so dass das herkömmliche Verfahren nicht beim physischen Aufbau der Anlage unterstützt. Zudem fehlt es an Flexibilität bei der Einbindung von neuen Sensoren und Aktoren mit zusätzlichen oder anderen Eigenschaften, die ursprünglich nicht vorgesehen waren.

In der noch unveröffentlichten eigenen Anmeldung unter dem Aktenzeichen EP 07013210.5 ist ein alternatives Verfahren zur Programmierung beschrieben. Dabei wird nicht nur die Auswertungslogik, sondern auch der physische Verdrahtungsplan mit einer grafischen Benutzeroberfläche erstellt. Auch hier ist aber das Angebot an Sensoren und Aktoren begrenzt, so dass dieses Verfahren ungeeignet zur Einbindung neuer, andersartiger Sensoren und Aktoren ist, die in der grafischen Benutzeroberfläche nicht vorgesehen sind.

Aus der WO 97/27540 A1 ist eine grafische Bedienoberfläche zur Programmierung von speicherprogrammierbaren Steuerungen bekannt, welche ermöglicht, Schnittstellen auszuwählen und über Fenster und Auswahlfelder zu parametrieren, beispielsweise Taster oder digitale Eingänge. Diese Schrift beschäftigt sich nicht mit Sicherheitssteuerungen und den spezifischen Problemstellungen, welche in der Sicherheitstechnik zu beachten sind. Die Anwendung von Sicherheitssteuerungen bewegt sich in der durch die Zahl von Komponenten erzeugten Komplexität zwischen einem einfachen Sicherheitsschalter und einer Anlagensteuerung. Im Gegensatz zu einer SPS sind also einerseits weniger Komponenten zu steuern, diese aber andererseits mit sehr hohen Sicherheitsanforderungen zu schalten. Darüber hinaus beschreibt das Dokument lediglich die Parametrierung einer feststehenden Anzahl vorgegebener Komponenten. Neue Komponenten mit anderen Parametern oder anderen Gruppierungen von Parametern lassen sich nicht erzeugen, so dass die Erweiterbarkeit und Flexibilität beeinträchtigt ist.

Es ist daher Aufgabe der Erfindung, eine Möglichkeit für die Programmierung oder Konfiguration einer Sicherheitssteuerung zu schaffen, welche eine möglichst hohe Flexibilität bietet.

Diese Aufgabe wird durch ein Verfahren zum Programmieren und/oder Konfigurieren gemäß Anspruch 1, eine entsprechende Vorrichtung gemäß Anspruch 9 sowie ein Computerprogrammprodukt gemäß Anspruch 10 gelöst. Der Begriff Sensor soll in einem sehr weiten Sinne als allgemeiner Signalgeber verstanden werden, der nicht unbedingt Ereignisse in der Umwelt detektiert, sondern beispielsweise auch wie ein Schalter oder eine Zeitschaltuhr Signale ausgibt. Die Steuerung kann in einer kompakten Ausführungsform Teil des Anschlussmoduls sein, welches dann gleichzeitig Steuerungs- und Anschlussmodul ist, gewöhnlich ist aber ein eigenes Steuerungsmodul vorgesehen. Die Steuerung kann zentral oder verteilt sein, und zwar sowohl über mehrere Module ein und derselben Modulreihe als auch verteilt über mehrere Modulreihen, welche untereinander über Feldbus oder dergleichen kommunizieren.

Die Erfindung geht von dem Grundgedanken aus, die Anzahl verfügbarer Sensoren und Aktoren erweiterbar zu machen. Damit können kunden- und anwendungsspezifische weitere Elemente auf möglichst einfache Weise hinzugefügt werden. Die neuen Elemente basieren auf einer Auswahl von Eigenschaften oder bewährten vorhandenen Elementen, um durch die neuen Elemente keine Fehler in die Sicherheitssteuerung einzuführen.

Hier und im Folgenden sind unter dem neuen Element ein Name, ein Symbol, ein Icon oder eine sonstige Repräsentation in der grafischen Oberfläche sowie die zu diesem Element hinterlegten Eigenschaftsdefinitionen zu verstehen.

Jedes neue Element bildet eine Klasse mit bestimmten Eigenschaftsdefinitionen, Wertbereichen und Voreinstellungen, also Parameter*typen*. Das neue Element steht für einen Sensor oder Aktor, der zuvor nicht auswählbar war. Ein neues Element unterscheidet sich also von den vorhandenen Elementen nicht nur durch die Werte seiner Parameter, sondern durch die Definition der Parametertypen oder Eigenschaften an sich. Wird ein erfindungsgemäß erstelltes neues Element im weiteren Verlauf einer Konfiguration oder Programmierung ausgewählt oder instanziiert, so können die festgelegten Eigenschaften also nicht mehr im erfindungsgemäßen Sinne verändert, sondern ihnen lediglich noch Eigenschaften zugewiesen werden, und zwar in von der Festlegung der Eigenschaften des neuen Elements definierter Weise. Beispielsweise kann ein neues Element eine dreidimensionale Stereoskopiekamera sein und eine ihrer Eigenschaftsdefinitionen als der Basisabstand ihrer beiden Einzelkameras festgelegt werden. Das somit neu geschaffene Element kann dann in jeder späteren Konfiguration oder Programmierung nicht, einfach oder mehrfach ausgewählt und damit instanziiert werden, wobei für jede solche ausgewählte dreidimensionale Stereoskopiekamera ein voreingestellter Basisabstand übernommen oder ein individueller Abstandswert gesetzt werden kann.

Vorteilhafterweise werden nach einer Auswahl Eingänge und/oder Ausgänge für ausgewählte Sensoren und/oder Aktoren durch Zuweisung von Werten zu den Eigenschaften parametriert, zusätzliche oder vorhandene Anschlussmodule ausgewählt, welche die benötigten Eingänge und/oder Ausgänge zur Verfügung stellen, die Sensoren und/oder Aktoren geeigneten Eingängen und/oder Ausgängen zugeordnet, Logikregeln festgelegt, nach denen Sensorsignale an den Eingängen der Sicherheitssteuerung zu Ansteuerungen für Aktoren an den Ausgängen der Sicherheitssteuerung verrechnet werden, die so entstandene Konfiguration durch Verbinden von Sensoren und/oder Aktoren mit Eingängen und/oder Ausgängen der Sicherheitssteuerung in einer von der Sicherheitssteuerung und den Sensoren und/oder Aktoren gebildeten Anlage umgesetzt, und das so entstandene Programm wird auf die zentrale Steuerung der Sicherheitssteuerung überspielt. Die von den neuen Elementen repräsentierten zusätzlichen Sensoren und Aktoren können damit in ein einfaches, sicheres und schnelles Verfahren zur Konfiguration und Programmierung einer Sicherheitssteuerung eingebunden werden.

Die ausgewählten Elemente werden bevorzugt zunächst in einem Zwischenbereich abgelegt und dann durch Aufruf einer Zuordnungsfunktion automatisch sämtlichen von den in dem Zwischenbereich abgelegten Elementen repräsentierten Sensoren und/oder Aktoren Eingängen und/oder Ausgängen geeigneter Anschlussmodule zugeordnet. Alternativ kann die Zuordnungsfunktion auf eine eigene Auswahl von Elementen des Zwischenbereichs beschränkt ausgeführt werden. Mit dem einfachen Aufruf erspart sich der Anwender die sonst notwendigen Schritte, die Eingänge und Ausgänge der verfügbaren Anschlussmodule zu überprüfen, gegebenenfalls Anschlussmodule gegen solche eines anderen Typs auszutauschen oder weitere Anschlussmodule hinzuzufügen, so dass insgesamt die Sicherheitssteuerung genügend Anschlüsse für die ausgewählten Elemente in dem Zwischenbereich anbietet, und die Einzelzuordnung von jedem Anschluss jedes ausgewählten Elements zu einem geeigneten Anschluss der Sicherheitssteuerung. Die Konfiguration wird somit erheblich vereinfacht und beschleunigt.

Eigenschaften, welche zu neuen Elementen für die spätere Zuweisung festgelegt werden können, umfassen bevorzugt eine oder mehrere der Folgenden: Typbezeichnung, insbesondere Bestellnummer, Name, Hersteller; Anzahl der Anschlussklemmen; Art der Anschlüsse, insbesondere digital oder analog, einkanalig oder zweikanalig; Art des Signals, insbesondere antivalent, entgegengesetzt oder äquivalent, elektrische Größen wie Strom, Spannung, Kapazität; Kommunikationsprotokoll, insbesondere Art des Signals, Eingangs- und Ausgangsverzögerung, Diskrepanzzeit; physische Eigenschaften der Anschlüsse, insbesondere Drahtdurchmesser oder Steckertyp; Testmöglichkeiten, insbesondere Testsignale, Testdauer, Testzeitpunkt, erwartete Ausgaben bei einem Test, Dauer und Zeitpunkt der Testung. Dies alles sind Eigenschaften von Sensoren und Aktoren, welche für die Aufgaben der Sicherheitssteuerung relevant sind oder sein können und sie decken daher zumindest einen Großteil derjenigen Eigenschaften oder Parametertypen ab, die für die Einbindung eines neuen Elements für einen neuen Sensor oder Aktor benötigt werden könnten. Es ist denkbar, dass ein angeschlossener Sensor oder Aktor selbst seine Parameterliste mitbringt, also die Eigenschaftsdefinitionen an die grafische Benutzeroberfläche überträgt und dadurch festlegt und so selbst die Möglichkeit schafft, dass Sensoren oder Aktoren seiner Art in die Sicherheitssteuerung integriert werden.

Die Repräsentation neuer Elemente in der grafischen Benutzeroberfläche ist vorteilhafterweise editierbar, insbesondere Name, Symbol, Anordnung in der Anzeige oder Anordnung in einem Menübaum. Damit können neue Elemente übersichtlich, auffällig, nach persönlichen Präferenzen oder möglichst fehlervermeidend benutzerdefiniert in die grafische Benutzeroberfläche integriert werden.

Neue Elemente basieren bevorzugt auf einem oder mehreren Grundelementen, wobei die Festlegung, welche Eigenschaften den neuen Elementen zugewiesen werden können, durch Übernahme eines oder Auswahl aus einem globalen oder von den Grundelementen geerbten Katalog vorgenommen wird. Das Aufsetzen auf vorhandenen Elementen ist besonders dann von Vorteil, wenn nur geringfügige Änderungen vorzunehmen oder zumindest umfangreiche Festlegungen von bereits verfügbaren Elementen übernommen werden können. Für die neuen Elemente können aber auch zusätzliche Eigenschaften festgelegt werden, welche keines der Grundelemente aufweisen. Der Katalog möglicher Eigenschaften umfasst also eine Auswahl denkbarer Eigenschaften von Sensoren und Aktoren, welche die Sicherheitssteuerung verarbeiten kann, und/oder die Vereinigungsmenge derjenigen Eigenschaften, welche die Grundelemente besitzen. Dabei sind aus Sicht der Sicherheitssteuerung zunächst nur die Eigenschaften an den Eingängen und Ausgängen relevant, weil das die Verbindung zu den Sensoren und Aktoren darstellt, aber auch weitere Eigenschaften können über die Sicherheitssteuerung festgelegt und später parametriert werden. Grundelemente sind sowohl solche, mit denen die grafische Benutzeroberfläche ausgeliefert wird, als auch gespeicherte oder importierte Elemente, die erfindungsgemäß erstellt worden sind.

Die ausgewählten oder geerbten Eigenschaften werden noch bevorzugter bei der Festlegung angepasst, indem für die spätere Auswahl Voreinstellungen, Wertbereiche, zusätzliche Einstellmöglichkeiten und/oder reduzierte Einstellmöglichkeiten vorgegeben werden. Durch die Festlegung der Eigenschaften wird, wie mehrfach erläutert, nur das Gerüst vorgegeben, also dass ein Element die Eigenschaft überhaupt aufweist. Wird ein neues Element später tatsächlich ausgewählt, so muss es noch parametriert werden, also Werte für die Eigenschaften gewählt werden. Um dies zu erleichtern und vor allem die Sicherheit zu gewährleisten, werden Voreinstellungen angeboten oder Wertbereiche begrenzt. Soweit geerbte Eigenschaften betroffen sind, ist es manchmal sinnvoll, dem neuen Element zusätzliche Einstellungsmöglichkeiten zu geben, also etwa einen neuen Wertebereich, eine weitere Bedingung oder einen Zusatzparameter. Umgekehrt werden bei der Festlegung manche Eigenschaften als grau hinterlegt oder als versteckt gekennzeichnet, so dass bei späterer Auswahl der Wert dieser Eigenschaft nicht mehr veränderbar oder sogar nicht mehr sichtbar ist. Dabei steht, wie bei anderen Ausführungsformen, die Idee im Hintergrund, dass das Anlegen neuer Elemente von einem Anwender mit tieferen technischen Kenntnissen vorgenommen wird als die spätere Auswahl. Dies kann durch besondere Authentifizierung für das Erzeugen oder Ändern neuer Elemente unterstützt werden, denn die Folgen eines falschen Voreinstellungswerts, den ein Anwender oft ohne weiteres Überlegen übernimmt, ist schwerwiegender als die konkrete Einstellung eines Parameters.

Nach der Festlegung, welche Eigenschaften den neuen Elementen zugewiesen werden können, wird vorteilhafterweise überprüft, ob das neue Element ein sicheres Element ist, insbesondere ob das neue Element unabhängig von der späteren Zuweisung von Eigenschaften schon durch die Festlegung sicher ist. Dafür sind verschiedenste Tests denkbar, wie das Prüfen von Voreinstellungen, Wertbereichen, von Bedingungen, wo und wie ein neues Element anschließbar ist, welche Eigenschaften miteinander verträglich sind. Beispielsweise ist ein Not-Aus-Schalter mit einer Latenz von mehreren Sekunden oder einer unsicheren einkanaligen Anbindung ungeeignet. Darauf weist die grafische Benutzeroberfläche zumindest mit einer Warnung oder mit einer Verweigerung der Erstellung eines solchen Elements hin. Außerdem können zu dem neuen Element Testmuster hinterlegt werden, um einen späteren Test der vollständig konfigurierten und parametrierten Sicherheitssteuerung zu unterstützen. Denn komplexere Tests, wie diejenigen der Logik, lassen sich noch nicht vollständig auf Basis eines neuen Elements durchführen, da die Funktionalität erheblich von der späteren konkreten Parametrierung und physischen wie logischen Einbindung abhängt.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: die beispielhafte Darstellung einer Anzeige einer grafischen Benutzeroberfläche für die Konfiguration und/oder Programmierung einer Sicherheitssteuerung;
- Fig. 2: eine rein beispielhafte logische Verknüpfung der Sensoren und Aktoren für die Auswahl und Einstellung der Auswertungsregeln für das Programm der Sicherheitssteuerung;
- Fig. 3: eine schematische Darstellung einer modularen Sicherheitssteuerung mit angeschlossenen Sensoren und Aktoren, die erfindungsgemäß konfiguriert und/oder programmiert werden kann;
- Fig. 4: ein Ablaufschema der erfindungsgemäßen Erzeugung neuer Elemente, die nach ihrer Erzeugung in der grafischen Benutzeroberfläche gemäß Figur 1 für die Konfiguration und/oder Programmierung verfügbar sind; und
- Fig.5: ein Ablaufschema der Konfiguration und/oder Programmierung mit Elementen beziehungsweise erfindungsgemäß erzeugten neuen Elementen.

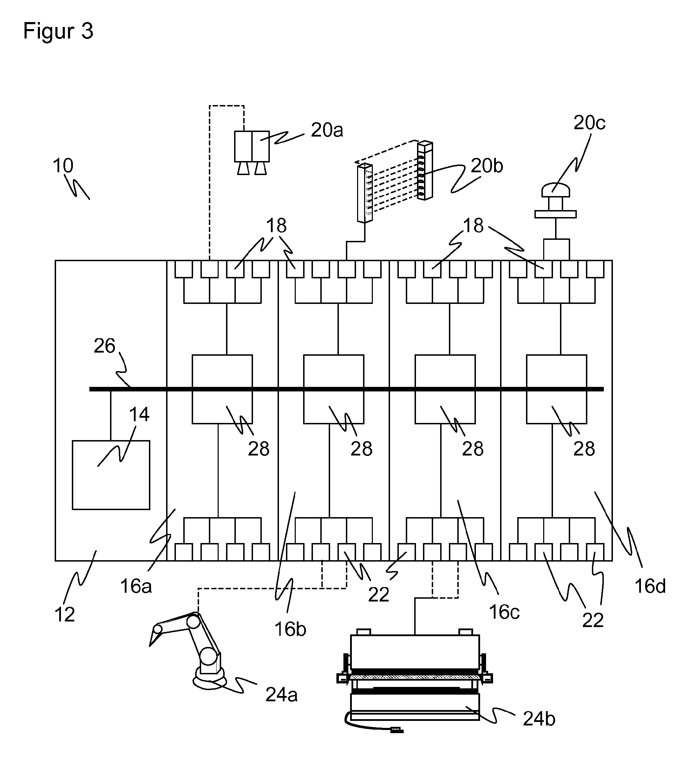

Figur 3 zeigt eine modulare Sicherheitssteuerung 10 mit einem zentralen Steuerungsmodul 12, welches eine zentrale sichere Steuerung 14 aufweist sowie mit vier Anschlussmodulen 16a-d. In den Anschlussmodulen 16a-d sind Eingänge 18 zum Anschluss von Sensoren 20a-c und Ausgänge 22 zum Anschluss von Aktoren 24a-b vorgesehen. Im Gegensatz zu der Darstellung können sich die Anschlussmodule 16a-d in Art und Anzahl ihrer Anschlüsse unterscheiden und nur Eingänge, nur Ausgänge sowie eine Mischung aus beidem in unterschiedlicher Anzahl haben. Auch die Anordnung und die physische Ausbildung der Anschlussklemmen 18, 22 ist durch Wahl eines bestimmten Anschlussmoduls 16 anpassbar an verschiedene Steckertypen, Kabelgrößen und Signalarten.

Die Sicherheitssteuerung hat die Aufgabe, für einen sicheren Betrieb der Sensoren 20a-c und vor allem der Aktoren 24a-b zu sorgen, also Aktoren 24a-b sicherheitsgerichtet abzuschalten (der Ausgang 22 ist dann ein OSSD, Output Switching Signal Device), ein Not-Aus der Anlage sicher auszuführen, einer beliebigen Ansteuerung an einen Aktor 24a-b, besonders einem Einschalten oder einem Wiederhochfahren zuzustimmen, Aktoren 24a-b freizugeben und dergleichen.

Ein Lichtgitter 20b, eine Sicherheitskamera 20a und ein Schalter 20c sind Beispiele für sicherheitsrelevante Sensoren oder Eingänge, welche ein Signal liefern können, auf das als Reaktion eine sicherheitsgerichtete Abschaltung erfolgt. Dies kann eine Unterbrechung der Lichtstrahlen des Lichtgitters 20b durch ein Körperteil, die Erkennung eines unzulässigen Eingriffs in einen Schutzbereich durch die Sicherheitskamera 20a oder ein Betätigen des Schalter 20c sein. An die Eingänge 18 können weitere Sicherheitssensoren beliebiger Art, wie Laserscanner, 3D-Kameras, Schaltmatten oder kapazitive Sensoren angeschlossen werden, aber auch sonstige Sensoren etwa zur Aufnahme von Messdaten oder einfache Schalter wie ein Not-Aus-Schalter. Alle derartigen Signalgeber werden hier und im Folgenden als Sensor bezeichnet.

Bei bestimmten Anwendungen sind auch Sensoren 20 an Ausgänge 22 und Aktoren 24 an Eingänge 18 angeschlossen, etwa um Testsignale zu übertragen, um einen Sensor 20 vorübergehend stumm zu schalten (muting), Teilbereiche aus dem Überwachungsbereich des Sensors 20 auszublenden (blanking), oder weil ein Aktor 24 neben einem Eingang für Ansteuerungen auch eigene Signalausgänge besitzt, mit denen er sich zum Teil selbst überwacht.

Ein Roboter 24a und eine Abkantpresse 24b sind als Beispiele Bedienpersonal bei unzulässigem Eingriff gefährdender Aktoren bevorzugt zweikanalig an Ausgänge 22 angeschlossen und können somit von dem Sicherheitsschaltgerät 10 einen Abschaltbefehl erhalten, um bei Erkennung einer Gefährdung oder eines unzulässigen Eingriffs durch Sicherheitssensoren 20a-b die Aktoren 24a-b abzuschalten oder in einen sicheren Zustand zu verbringen. Dabei kann das Lichtgitter 20a der Überwachung der Abkantpresse 24a und die Sicherheitskamera 20b der Überwachung des Roboters 24b dienen, so dass einander funktionell zugehörige Sensoren 20a-b und Aktoren 24a-b auch jeweils an einem Modul 16a bzw. 16b angeschlossen sind. Die funktionelle Zuordnung erfolgt aber über die zentrale Steuerung 14, so dass eine solche Abbildung der Anlage zwar übersichtlicher, keineswegs aber erforderlich ist. Weitere als die dargestellten Aktoren sind denkbar, und zwar sowohl solche, welche einen Gefahrenbereich erzeugen als auch andere, etwa eine Warnlampe, eine Sirene, eine Anzeige und dergleichen mehr.

Zwischen der Sicherheitssteuerung 14 und den Eingängen 18 bzw. den Ausgängen 22 besteht eine Backplane genannte serielle Kommunikationsverbindung 26, die insbesondere ein Bus ist und auf einem seriellen Standard, einem Feldbusstandard, wie IO-Link, Profibus, CAN oder auch einem proprietären Standard basieren und zusätzlich auch fehlersicher ausgelegt sein kann. Alternativ zu einem Bus kann auch eine direkte, eine parallele Verbindung oder eine sonstige den zu kommunizierenden Datenmengen und den erforderlichen Schaltzeiten entsprechende Verbindung 26 vorgesehen sein. Die Module 16a-d weisen eine eigene Steuerung auf, um an der Buskommunikation teilnehmen zu können. Hierfür kann ein Mikroprozessor, ein FPGA, ein ASIC, eine programmierbare Logik oder ein ähnlicher digitaler Baustein vorgesehen sein. Die Steuerungen 18 können auch Auswertungsaufgaben übernehmen oder gemeinsam mit der zentralen Steuerung 14 verteilte Auswertungen vornehmen, die von einfachen Bool'schen Verknüpfungen bis hin zu komplexen Auswertungen, etwa einer dreidimensionalen Sicherheitskamera, reichen können.

Das Sicherheitsschaltgerät 10 kann über ein Gateway, welches ein eigenes Modul bildet oder in die Sicherheitssteuerung 14 integriert ist, an eine externe Anlagensteuerung angeschlossen sein, welche mit nicht sicherheitsrelevanten Steuerungsaspekten befasst ist. Die Anbindung kann drahtlos oder drahtgebunden, in der Praxis meist über einen Feldbus erfolgen. Gibt die externe Steuerung einen Befehl an einen der Aktoren 24, und zwar alternativ über die Ausgänge 22, welche auch Abschaltsignale ausgeben können, oder auf eigene Ausgänge, so wird er nur dann wirksam, wenn die Sicherheitssteuerung 14 zustimmt, also etwa durch UND-Verknüpfung von Ansteuerung und Zustimmungssignal. Damit wird verhindert, dass die externe Anlagensteuerung eine gefährliche Situation schafft. Die externe Steuerung kann umgekehrt eine Abschaltung der Aktoren 24 nicht verhindern, da die Sicherheitsaufgaben durch die Sicherheitssteuerung 10 gesteuert werden.

Die Module 12, 16a-d sind jeweils in einheitlichen Gehäusen untergebracht und werden durch Anschlussstücke mechanisch und elektrisch miteinander verbunden. Das Steuerungsmodul 12 bildet somit den Kopf einer Modulreihe. Denkbar ist auch, dass mehrere Steuerungsmodule 12 als Kopf mehrerer Modulreihen dezentral angeordnet sind, etwa jeweils in der Nähe der zu überwachenden Teile der Gesamtanlage, die untereinander über einen Feldbus kommunizieren.

Sicherheitssteuerung 14, Eingänge 18, Ausgänge 22 und Bus 26 sind fehlersicher ausgebildet, also durch Maßnahmen wie zweikanalige Ausführung, durch diversitäre, redundante, selbstprüfende oder sonst sichere Auswertungen und Selbsttests. Entsprechende Sicherheitsanforderungen für die Sicherheitssteuerung sind in der Norm EN 954-1 bzw. ISO 13849 (performance level) festgelegt. Die damit mögliche Sicherheitsstufe und die weiteren Sicherheitsanforderungen an eine Anwendung sind in der Norm EN 61508 bzw. EN 62061 definiert.

Die Erfindung betrifft die Konfiguration und Programmierung der Sicherheitssteuerung 10. Dabei wird unter Konfigurieren die Auswahl von Elementen 12, 16, 20, 24 sowie deren physische Anordnung und Verbindung beziehungsweise Verdrahtung verstanden. Programmieren ist das auf Basis von Benutzerangaben automatische Erzeugen und Zusammenfügen von der Konfiguration entsprechenden Programmteilen unter Einbeziehung logischer Auswertungsregeln, welche die Elemente 12, 16, 20, 24 miteinander verbinden, um Eingangssignale der Sensoren 20 zu Ansteuerungen an die Aktoren 24 zu verrechnen. Das Vorgeben der Logik, also der logischen Auswertungsregeln, ist eine Mischung aus Konfigurieren und Programmieren, denn der Anwender muss lediglich die logischen Verbindungsregeln vorgeben, was einer Konfiguration nahe kommt, während daraus aber erfindungsgemäß automatisch anhand der zu den Verbindungsregeln hinterlegten Programmteile das Programm für die Sicherheitssteuerung 10 generiert wird, worin eher ein Programmieren liegt. Im Folgenden wird meist vereinfachend der Begriff Konfigurieren verwendet, welcher situationsabhängig eine Programmierung einschließen soll.

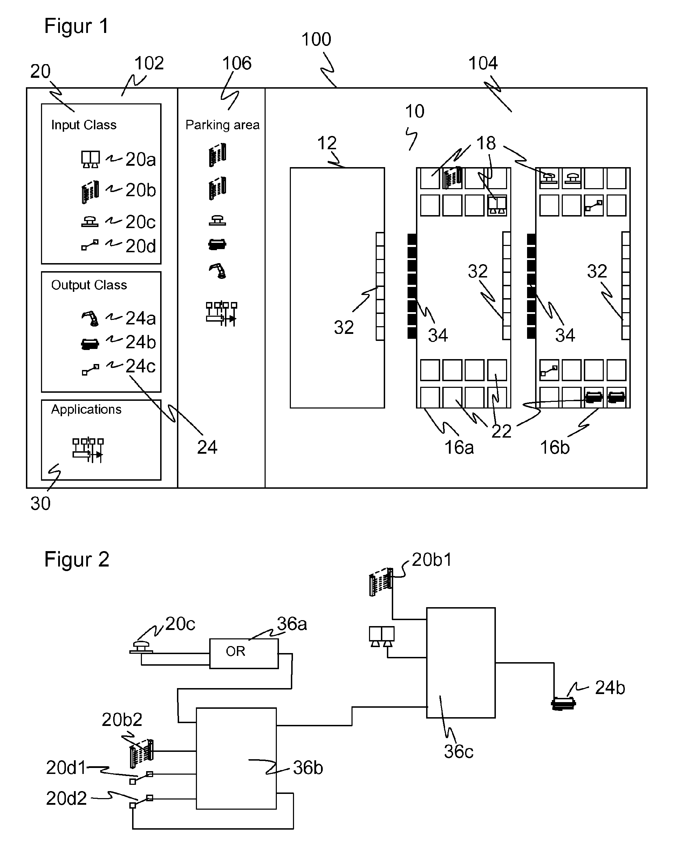

Figur 1 zeigt eine beispielhafte Anzeige 100 der grafischen Benutzeroberfläche (GUI, graphic user interface) eines nicht dargestellten Programmiergerätes zur Ausführung der erfindungsgemäßen Konfiguration einer Sicherheitssteuerung 10. Hier und im Folgenden werden gleiche Merkmale mit gleichen Bezugszeichen bezeichnet. Das Programmiergerät ist ein geeignetes Notebook, ein PC, ein PDA, ein Handy oder dergleichen mit einem Display für die Anzeige 100, einem Eingabegerät wie einer Tastatur und einer Maus und einem Prozessor zur Ausführung der Benutzeroberfläche und der Erstellung des resultierenden Konfigurationsplans, auch per Drucker und des resultierenden Steuerungsprogramms für die Sicherheitssteuerung 10. Das Programmiergerät ist alternativ Teil der Sicherheitssteuerung 10 oder der übergeordneten Steuerung. Das Konfigurationswerkzeug, also das Programm für die grafische Benutzeroberfläche und die im Hintergrund zugehörigen Regeln zur Generierung des Steuerungsprogramms ist auf einem Speichermedium, wie einer CD oder einem USB-Stick, gespeichert. Bevorzugt ist es auch in der Sicherheitssteuerung 10 oder einer übergeordneten Steuerung gespeichert und kann von dort in einen üblichen Computer geladen und ausgeführt werden.

Anhand der Anzeige 100 wird nun beschrieben, wie ein Anwender die Konfigurierung der Sicherheitssteuerung 10 mit Hilfe der grafischen Benutzeroberfläche durchführt.

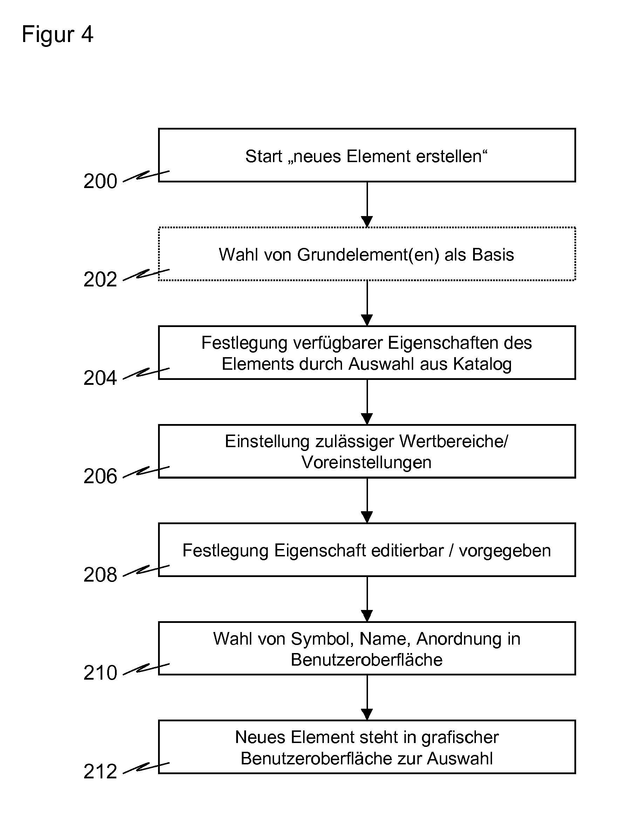

Die Anzeige 100 bietet in einem linken Fenster 102 an die Sicherheitssteuerung 10 anschließbare Elemente an, nämlich Sensoren oder Eingangsklassen (input class) 20, Aktoren oder Ausgangsklassen (output class) 24 und Teilapplikationen (applications) 30. Neben der dargestellten Sicherheitskamera 20a, dem Lichtgitter 20b, einem Schalter 20c und einer Lichtschranke 20d umfassen die Eingangsklassen weitere zwei- und dreidimensionale Sicherheitskameras, Mutingsensoren, Sicherheitsmatten, Bumper, Sicherheitsschalter einschließlich Not-Aus-Schaltern, Zweihandschaltungen und weitere Geräte, die ein möglicherweise sicherheitsrelevantes Eingangssignal für die Sicherheitssteuerung 10 liefern können. Als Ausgangsklassen kommen über die dargestellten Roboter 20a, Pressen 20b und eine Lichtschranke 20c jegliche Maschinen, Roboter, Fahrzeuge, Lampen, Sirenen, aber auch Sensoren in Frage, die ein Feedback erhalten sollen, etwa zur vorübergehenden Deaktivierung (muting, blanking). Erfindungsgemäß ist vorgesehen, die Elemente der Eingangs- und Ausgangsklassen zu erweitern, also die Möglichkeit zu schaffen, neue Elemente für die spätere Auswahl zu generieren. Diese Erzeugung neuer Elemente wird weiter unten im Zusammenhang mit Figur 4 näher erläutert.

In einem rechten Fenster 104 wird die Sicherheitssteuerung 10 mit Steuerungsmodul 12 und Anschlussmodulen 16a-b samt ihren Eingängen 18 und Ausgängen 22 angezeigt. Auch das Steuerungsmodul 10 kann Eingänge und/oder Ausgänge aufweisen. Das Steuerungsmodul 12 hat eine Buchse 32 und jedes Anschlussmodul 16 eine Buchse 32 und einen Stecker 34, um die Sicherheitssteuerung 10 als mechanisch einheitliche Modulreihe zusammenstecken zu können. Die Erfindung ist darauf nicht notwendig beschränkt, denn die Module können auch physisch voneinander getrennt sein, solange sie logisch verbunden bleiben. Mit einem kleinen Icon in einem Eingang 18 oder einem Ausgang 22 wird bildlich dargestellt, mit welchem Sensor 20 oder Aktor 24 dieser Anschluss 18, 22 verbunden sein soll. Das rechte Fenster 104 zeigt somit die Konfiguration von Modulen 12, 16a-b, die angeschlossenen Sensoren 20 und Aktoren 24 sowie die Zuordnung zu bestimmten Eingängen 18 und Ausgängen 22.

Die Arbeitsschritte eines Benutzers, die zu einer solchen Konfiguration führen, sind die Folgenden: Aus den angebotenen Eingangs- und Ausgangsklassen wird ein benötigter Sensor 20 oder Aktor 24, im Folgenden manchmal zusammenfassend als Funktionseinheit 20, 24 bezeichnet, ausgewählt. Diese Funktionseinheit 20, 24 wird anschließend parametriert, indem durch verschiedene Fenster und Schaltflächen Werte, Modi und dergleichen eingestellt werden. Die derart parametrierte Funktionseinheit 20, 24 wird zunächst in einem mittleren Fenster 106 (Parking area) abgelegt. Mit Auswahl weiterer Funktionseinheiten 20, 24 werden diese Schritte wiederholt, bis sämtliche oder eine gewünschte Teilmenge der benötigten Funktionseinheiten 20, 24 in dem mittleren Fenster 106 abgelegt sind.

Mit Aufruf einer Zuordnungsfunktion werden dann automatisch eine Reihe weiterer Konfigurationsschritte ausgeführt. Selbstverständlich ist in einer alternativen, weniger komfortablen Ausführungsform möglich, diese Schritte einzeln von Hand auszuführen. Die Zuordnungsfunktion berücksichtigt sämtliche Funktionseinheiten 20, 24 in dem mittleren Fenster 106, kann aber auch auf eine durch Benutzerauswahl definierte Teilauswahl eingeschränkt werden.

Zuerst wird bestimmt, welche Eingänge 18 und Ausgänge 22 die Funktionseinheiten 20, 24 benötigen. Die hierfür geeigneten Anschlussmodule 16a-b werden ausgewählt. Sind nicht mehr genug Anschlüsse 18, 22 für die gewählten Funktionseinheiten 20, 24 vorhanden, so muss ein weiteres Anschlussmodul 16a-b angefügt oder ein vorhandenes durch ein solches mit mehr Anschlüssen ausgetauscht werden. Die somit ausreichend verfügbaren Anschlüsse 18, 22 werden dann den Funktionseinheiten 20, 24 zugeordnet und damit entschieden, an welche Eingänge 18 und Ausgänge 22 jede Funktionseinheit 20, 24 anzuschließen ist. Dabei kann eine Funktionseinheit 20, 24 mehrere Eingänge 18 und/oder Ausgänge 22 belegen. Dann werden die Funktionseinheiten 20, 24 in das rechte Fenster 104 verschoben, und zwar optisch als Symbol in jedem mit der Funktionseinheit 20, 24 verschalteten Eingang oder Ausgang. Im rechten Fenster 104 wird damit die fertige Konfiguration der Funktionseinheiten des mittleren Fensters 106 dargestellt.

Die von der Zuordnungsfunktion gewählten Verbindungen können aber weiterhin jederzeit verändert werden. So kann eine Funktionseinheit 20, 24 wieder entfernt, in das mittlere Fenster 106 zurückgeschoben oder von dort durch erneuten Aufruf der Zuordnungsfunktion wieder angeschlossen werden. Manuelle oder automatische Optimierung kann dafür genutzt werden, die vorhandenen Anschlussmodule 16 auszunutzen, mit weniger Anschlussmodulen 16 auszukommen oder für größere logische oder optische Übersicht zu sorgen.

Nachdem somit die physische Zuordnung festgelegt ist, muss noch die logische Verknüpfung geschaffen werden. Figur 2 zeigt eine weitere Ansicht der grafischen Benutzeroberfläche mit folgenden Funktionseinheiten: Eine dreidimensionale Sicherheitskamera 20a, zwei Lichtgitter 20b1, 20b2, ein Not-Aus-Schalter 20c, zwei Lichtschranken 20d1, 20d2 und eine Presse 24b. Diese Elemente werden mit virtuellen Logikbausteinen 36a-c verbunden, welche Auswertungsregeln repräsentieren. Beispielsweise wird zur Einbindung des Not-Aus-Schalters mit zweikanaliger redundanter Anbindung ein ODER-Baustein 36a gewählt, der dann selbst einen Eingang eines komplexeren Auswertungsbausteins 36b bildet. Die genaue Funktionsweise der exemplarisch dargestellten Logikbausteine 36b, 36c spielt im Rahmen dieser Beschreibung keine Rolle, da die gezeigten Logikregeln nur der Erläuterung dienen und nicht unbedingt ein praktisch relevantes Anwendungsbeispiel sind. Wichtig ist, dass die Elemente über vorgegebene Logikregeln 36a-c miteinander verbunden werden, um die Eingangssignale zu den für die Sicherheitsanwendung gewünschten Ansteuerungen zu verrechnen. Dazu muss jede Funktionseinheit 20, 24 mit einem oder mehreren passenden Logikbausteinen 36a-c einfach oder mehrfach verbunden werden. Das Konfigurationswerkzeug bietet dabei nur solche Verbindungen an, die mit dem jeweiligen Element auch geleistet werden, also etwa keine zweikanalige Anbindung für eine einkanalige oder einkanalig parametrierte Funktionseinheit 20, 24.

Werden physische Verbindungen von Funktionseinheiten 20, 24 im Rahmen einer Optimierung oder einer manuellen Änderung vertauscht, nachdem die Logik schon definiert wurde, also Funktionseinheiten 20, 24 anderen Eingängen 18 oder Ausgängen 22 desselben oder eines anderen Ausgangsmoduls 16a-b zugewiesen, so verändert sich dabei die Logik nicht. Die logischen Auswertungsregeln sind invariant gegenüber solchen Vertauschungen; sie werden bei der abschließenden Generierung des Steuerungsprogramms automatisch richtig berücksichtigt.

Mit Begriffen wie Auswählen, Verbinden und dergleichen sind im Zusammenhang mit der grafischen Benutzeroberfläche Symbole für Sensoren 20, Aktoren 24, Module 12, 16, Verbindungen, Logikelemente 36a-c und entsprechende Logikregeln über Menüs, Icons, Drag & Drop und dergleichen gemeint. Eine physische Verdrahtung folgt erst anschließend anhand des Konfigurationsplans.

Alternativ zu einzelnen Funktionseinheiten 20, 24 können auch vorgefertigte, mehrfach gebrauchte oder standardisierte Teilapplikationen 30 eingebunden werden. Diese bringen ihre zugehörigen parametrierten Funktionseinheiten 20, 24 sowie die innere logische Verknüpfung bereits mit, so dass nur noch die äußere logische Verknüpfung vorgenommen werden muss, indem Freigaben und Abschaltpfade definiert werden. Ein Beispiel unter vielen ist ein sogenanntes "sequential muting", bei dem einige Lichtstrahlen eines Lichtgitters nacheinander stumm geschaltet werden, beispielsweise damit das erlaubte Durchfahren einer Palette mit bekannten geometrischen Eigenschaften nicht zu einem Abschaltsignal führt. Solche Teilapplikationen beschleunigen die Konfiguration und machen sie fehlersicherer, weil die innere Konfiguration der Teilapplikation nur einmal, auch ab Werk oder durch einen Experten, vorgegeben werden.

Anhand der Figur 4 wird nun erläutert, wie die Eingangsklassen und Ausgangsklassen, also die für die Konfiguration der Sicherheitssteuerung 10 verfügbaren Sensoren 20 und Aktoren 24, durch die erfindungsgemäße Erzeugung neuer Elemente erweitert werden können. Gemäß dem in Figur 4 dargestellten Ablaufschema werden Eigenschaften festgelegt, welche zu den neuen Elementen gehören. Damit steht das neue Element zur Auswahl, um eine Sicherheitssteuerung 10 zu konfigurieren. Erst falls und sobald es später tatsächlich benötigt und dafür ausgewählt wird, erfolgt eine konkrete Parametrierung, also die Zuweisung von Werten zu diesen Eigenschaften, wenn ein solches neues Element später tatsächlich ausgewählt und in das mittlere Fenster 106 verschoben wird.

In einem ersten Schritt 200 wird über die grafische Benutzeroberfläche der Befehl erteilt, ein neues Element zu erstellen. In vielen Fällen beruht dieses neue Element auf einem oder mehreren bestehenden Elementen, welche in einem zweiten Schritt 202 ausgewählt werden. Basiselemente, die häufig als Grundlage dienen können, sind einkanalige oder zweikanalige Eingänge oder Ausgänge (aus der Sicht der Funktionseinheiten bezeichnet, demnach korrespondierend zu später zu verbindenden Ausgängen 22, beziehungsweise Eingängen 18 der Anschlussmodule 16). Wenn aber beispielsweise ein Nachfolgemodell eines vorhandenen Lichtgitters 20b als neues Element eingefügt werden soll, so wird das Element für das Vorgängermodell das geeignete Basiselement sein. Der Schritt 202 ist optional und daher gestrichelt dargestellt, weil es auch möglich ist, neue Elemente unabhängig von vorhandenen Elementen von Grund auf neu zu erstellen.

Die Informationen zu dem neuen Element werden als dessen Eigenschaften in einem Schritt 206 festgelegt. Im Gegensatz zu einer vollständigen Programmiersprache bietet die Benutzeroberfläche nicht beliebige Eigenschaften an, sondern einen Katalog von mit einer sicheren Konfiguration vereinbaren Eigenschaften. Dieser Katalog kann aus einer vollständigen Auflistung aller von der Sicherheitssteuerung 10 verarbeitbaren Eigenschaften bestehen, aber auch von der grafischen Benutzeroberfläche begrenzt werden, besonders auf diejenigen Eigenschaften, welche in Schritt 202 bezeichnete Basiselemente aufweisen können. Zwischen den Eigenschaften können Bedingungen definiert sein, welche weitere Eigenschaften freischalten oder entfernen. So ist etwa nicht sinnvoll, für eine als einkanalig bezeichnete Funktionseinheit 20, 24 noch Eigenschaften anzubieten, welche sich auf das Verhältnis der beiden Kanäle einer zweikanaligen Ausführung beziehen.

Beispiele für Eigenschaften, die festgelegt werden können, sind Typbezeichnungen einschließlich Bestellnummer, Name oder Hersteller, die Anzahl der Anschlussklemmen, die Art der Anschlüsse, insbesondere ob digital oder analog, die einkanalige oder zweikanalige Anbindung, die Art des Signals, insbesondere ob sich die beiden Kanäle eines zweikanaligen Anschlusses antivalent, entgegengesetzt oder äquivalent verhalten, elektrische Größen wie Strom, Spannung oder Kapazität, ein Kommunikationsprotokoll, also eine Einigung zwischen zentraler Steuerung 14 und der von dem neuen Element repräsentierten Funktionseinheit 20, 24 über die Signalübertragung, welches beispielsweise die Art des Signals, die Eingangs- und Ausgangsverzögerung oder eine Diskrepanzzeit (Zeit, innerhalb derer die beiden Kanäle eines zweikanaligen Anschlusses dasselbe Signal anzeigen müssen, damit es als gültig erkannt wird) festlegt, physische Eigenschaften der Anschlüsse, insbesondere Drahtdurchmesser oder Steckertyp sowie Testmöglichkeiten einschließlich Testsignale, Testdauer, Testzeitpunkt, erwartete Ausgaben bei einem Test, Dauer oder Zeitpunkt der Testung und weitere denkbare Größen wie Kompatibilität zu der Norm IEC61131-2. Die Eigenschaften müssen also die vollständige und sichere Einbindung in die Sicherheitssteuerung 10 ermöglichen, vor allem hinsichtlich sicherheitsgerichteter Sensordaten und Abschaltsignale. Manche neu einzubindenden Funktionseinheiten 20, 24 erfordern auch Parameter, die bisher nicht vorgesehen waren und deren Definition die Funktionseinheit 20, 24 selbst als Erweiterung des Konfigurationswerkzeugs mitbringt.

In einem Schritt 206 werden für die festgelegten Eigenschaften Voreinstellungen vorgenommen oder zulässige Wertebereiche angegeben. In einem Schritt 208 wird definiert, ob Eigenschaften editierbar sind, ob also eine Voreinstellung später bei der Parametrierung nur ein Vorschlag oder eine feste Einstellung ist. So ist zum Beispiel der Typ des neuen Elements keine sinnvoll zu editierende Eigenschaft, da sie konstant für alle späteren Instanzen des neuen Elements gilt. Dagegen wäre ein Name eine editierbare Eigenschaft, da sie sich auf die Instanz bezieht und gewöhnlich individuell zugewiesen wird. Nicht editierbare Eigenschaften können bei der Parametrierung ausgeblendet oder optisch markiert werden, beispielsweise grau hinterlegt.

In einem Schritt 208 werden dem neuen Element ein Name, ein Symbol zur Darstellung in der Anzeige 200 sowie eine räumliche und inhaltliche Anordnung zugewiesen. Damit kann es dann später innerhalb des richtigen Menüs mit einem verständlichen Namen und einem aussagekräftigen Icon zur Auswahl aufgefunden werden. Spätestens jetzt wird auch bestimmt, ob es sich um eine Eingangs- oder Ausgangsklasse handelt und innerhalb dessen nach Möglichkeit eine sinnvolle Kategorie zugewiesen, also Lichtschranke, Lichtgitter, Laserscanner, Sicherheitskamera, Not-Aus-Schalter, Werkzeugmaschine, Roboter, Signallampe, Sirene und dergleichen.

Damit ist das neue Element fertig und steht mit einem Schritt 212 als zusätzliche Auswahlmöglichkeit im Fenster 202 zur Verfügung. Das erfindungsgemäße Verfahren hat somit auf einer sehr anschaulichen Erklärungsebene festgelegt, welche Fenster und Schaltflächen später bei der Auswahl des neuen Elements zur Parametrierung angezeigt werden, während die Parametrierung selbst in der Eingabe geeigneter Größen in diese Fenster und Schaltflächen besteht.

Bevor das neue Element auf der grafischen Benutzeroberfläche auswählbar wird, kann es noch getestet werden. Dies kann automatisch oder durch Freigabe eines eigens authentifizierten Experten geschehen. Dabei geht es um die Frage, ob die festgelegten Eigenschaften die Funktionseinheit für Sicherheitsaspekte abschließend beschreiben können, ob die Voreinstellungen und Wertebereiche die Sicherheit gewährleisten, ob die angestrebten Schalt- und Reaktionszeiten erreicht werden und Weiteres.

Als Alternative zu dem soeben beschriebenen Verfahren ist denkbar, dass eine Funktionseinheit 20, 24 physisch an die Sicherheitssteuerung 10 angeschlossen wird und eine Beschreibungsdatei überträgt, welche neue Elemente definiert. Dabei handelt es sich um die Beschreibungsdatei der Funktionseinheit 20, 24 selbst, die somit dafür sorgt, dass das Konfigurationswerkzeug mit ihr umgehen kann, aber möglicherweise auch um weitere Funktionseinheiten 20, 24, um auf diese einfache Weise die grafische Benutzeroberfläche zu erweitern und zu aktualisieren. Die neuen Elemente können darüber hinaus auch auf einem beliebigen Speichermedium ex- und importiert werden.

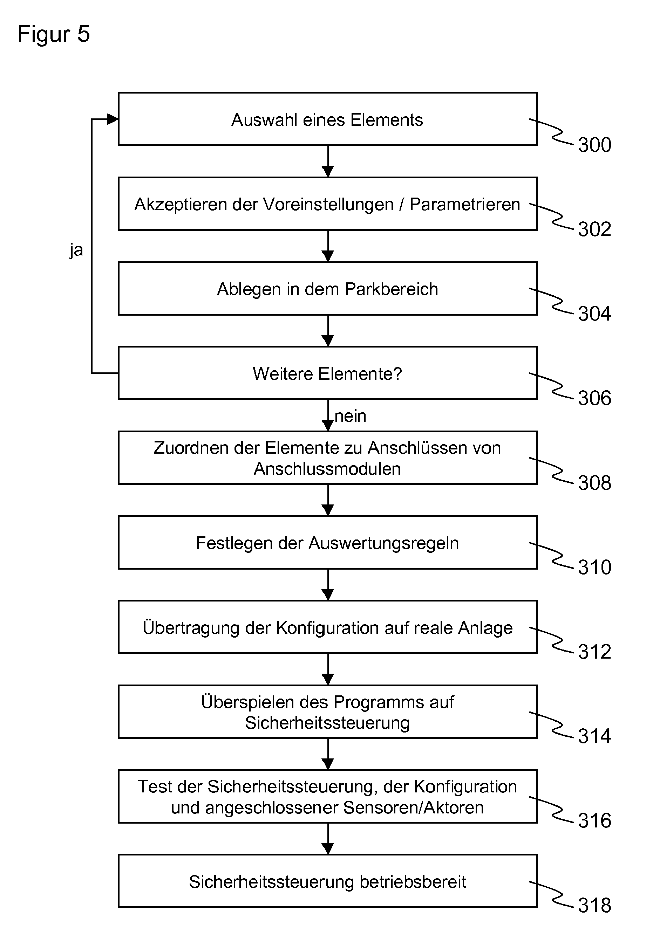

Figur 5 gibt noch einmal einen Gesamtüberblick über den Ablauf einer Konfiguration und Programmierung einer Sicherheitssteuerung 10. In einem ersten Schritt 300 wird ein Element ausgewählt, welches einen anzuschließenden Sensor 20 oder Aktor 24 repräsentiert. Dabei spielt es an dieser Stelle keine Rolle mehr, ob das Element ursprünglich vorhanden war oder ein erfindungsgemäßes neues Element ist, denn durch das Verfahren, welches anhand der Figur 4 beschrieben wurde, sind neue Elemente für den Anwender von den zuvor bestehenden Elementen gar nicht mehr unterscheidbar, auch wenn optional denkbar ist, sie optisch hervorzuheben, um anzuzeigen, dass sie nicht ab Werk vorhanden waren.

Die ausgewählte Funktionseinheit 20, 24 wird in einem Schritt 302 parametriert, wobei jeweils das Akzeptieren von Voreinstellungen ausreichen kann. Sie wird dann in einem Schritt 304 in dem mittleren Fenster 106 abgelegt. Im Schritt 306 entscheidet sich der Anwender, weitere Funktionseinheiten 20, 24 auszuwählen oder die in dem Fenster 106 abgelegten Funktionseinheiten 20, 24 in die Sicherheitssteuerung einzubinden. Dabei gibt es keine Beschränkungen hinsichtlich der Auswahl weiterer Funktionseinheiten, der Anwender kann also jederzeit weitere Funktionseinheiten 20, 24 auswählen und einbinden.

Die in dem mittleren Fenster abgelegten Funktionseinheiten 20, 24 werden durch Aufruf der Zuordnungsfunktion in einem Schritt 308 Eingängen 18 und Ausgängen 22 geeigneter Anschlussmodule 16a-b zugeordnet, wobei gegebenenfalls Anschlussmodule 16a-b automatisch ausgetauscht oder ergänzt werden, und dies entsprechend in dem Fenster 106 dargestellt.

In einem Schritt 310 werden die Auswertungsregeln festgelegt, wie dies oben im Zusammenhang mit Figur 2 beschrieben wurde.

In einem Schritt 312 wird der in der Anzeige 100 gezeigte Konfigurationsplan in die reale Anlage übertragen, indem entsprechende Leitungen zwischen Sensoren 20, Aktoren 24 und der Sicherheitssteuerung 10 gelegt und angeschlossen werden. Die benötigten Funktionseinheiten 20, 24 sowie die benötigten Steuerungsmodule 10 und Anschlussmodule 16 können zuvor direkt über eine Maske online oder offline bestellt werden. Der Konfigurationsplan wird ausgedruckt oder anders angezeigt und die Komponenten werden in der Werkhalle verdrahtet, ohne dass hierfür eine tiefere technische Kompetenz erforderlich wäre als das Lesen des Plans.

Aus der grafisch entworfenen Logik erstellt das Konfigurationswerkzeug in einem Schritt 314 ein Steuerungsprogramm durch Zusammenstellen von den Logikbausteinen 36a-c entsprechenden Teilprogrammen und Einbindung in ein Gesamtprogramm, welches auf die zentrale Steuerung 14 überspielt wird.

Die Steuerung 14 kann dann in einem Schritt 316 einen Test ausführen und dabei sämtliche angeschlossene Funktionseinheiten 20, 24 nach ihrem Typ abfragen, gegebenenfalls einige oder alle der eingestellten Parameter an die Funktionseinheit 20, 24 übertragen, damit deren Parametrierung mit der Konfiguration übereinstimmt und feststellen, ob die Anschlüsse richtig vorgenommen wurden. Dazu müssen Anschlüsse 18, 22 für eine entsprechende Datenkommunikation ausgebildet sein, beispielsweise über IO-Link oder ein Kommunikationsprotokoll, welches an den Anschlüssen 18, 22 die für den Datenaustausch benötigten Signale austauschen kann. Eine Übertragung von Daten ist in beide Richtungen denkbar: Hin zu den Funktionseinheiten 20, 24, um letztere zu parametrieren, oder in umgekehrter Richtung von den Funktionseinheiten 20, 24 zu der Sicherheitssteuerung 10 oder dem Konfigurationswerkzeug, um eine tatsächliche Parametrierung oder vollständige Konfiguration in das Konfigurationswerkzeug einzulesen.

Stimmen die vorgenommenen Anschlüsse nicht, so erzeugt die Steuerung 14 eine Fehlermeldung mit einem Hinweis, welche Funktionseinheiten 20, 24, beziehungsweise welche Verbindungen geändert werden müssen. Ein solcher Hinweis wird bevorzugt wieder über das Konfigurationswerkzeug angezeigt und bearbeitet. Sofern die Logik mit der vorhandenen physischen Konfiguration verträglich ist, kann die Steuerung 14 auch vorschlagen, statt der Verdrahtung das Steuerungsprogramm anzupassen. Abschließend kann die Steuerung 14 jede angeschlossene Funktionseinheit 20, 24 gemäß der Testkonfiguration testen oder zu einem Selbsttest auffordern. Danach ist die Sicherheitssteuerung 10 in einem Schritt 318 betriebsbereit.

Die oben für die Sicherheitssteuerung 10 beschriebenen und bei geforderter Sicherheitskategorie normierten Sicherheitsanforderungen gelten auch für die Konfiguration und Programmierung, besonders für die Generierung des Programms sowie für die Übertragung des Programms auf die Steuerung 14. Das Programmiergerät selbst darf notfalls abstürzen, da noch keine Gefahrenquellen existieren, die damit erstellte Konfiguration und das Programm dagegen müssen fehlersicher sein.

## Patentansprüche

1. Verfahren zum Programmieren und/oder Konfigurieren einer Sicherheitssteuerung (10) mit einer Steuerung (14) und mindestens einem Anschlussmodul (16), welches zumindest einen Eingang (18) für einen Sensor (20) und/oder zumindest einen Ausgang (22) für einen Aktor (24) aufweist, wobei über eine grafische Benutzeroberfläche an die Sicherheitssteuerung (10) anzuschließende Sensoren (20) und/oder Aktoren (24) repräsentierende Elemente ausgewählt werden,
**dadurch gekennzeichnet,**
**dass** neue Elemente für weitere anschließbare Sensoren (20) und/oder Aktoren (24) erzeugt werden und für die neuen Elemente festgelegt wird, welche Eigenschaften ihnen zugewiesen werden können, wobei die neuen Elemente nach ihrer Erzeugung in der grafischen Benutzeroberfläche für das Programmieren und/oder Konfigurieren der von ihnen repräsentierten Sensoren (20) und/oder Aktoren (24) zur Auswahl stehen.

2. Verfahren nach Anspruch 1,
wobei nach einer Auswahl Eingänge (18) und/oder Ausgänge (22) für ausgewählte Sensoren (20) und/oder Aktoren (24) durch Zuweisung von Werten zu den Eigenschaften parametriert werden, zusätzliche oder vorhandene Anschlussmodule (16) ausgewählt werden, welche die benötigten Eingänge (18) und/oder Ausgänge (22) zur Verfügung stellen, die Sensoren (20) und/oder Aktoren (24) geeigneten Eingängen (18) und/oder Ausgängen (22) zugeordnet werden, Logikregeln festgelegt werden, nach denen Sensorsignale an den Eingängen (18) der Sicherheitssteuerung (10) zu Ansteuerungen für Aktoren (24) an den Ausgängen (22) der Sicherheitssteuerung (10) verrechnet werden, die so entstandene Konfiguration durch Verbinden von Sensoren (20) und/oder Aktoren (24) mit Eingängen (18) und/oder Ausgängen (22) der Sicherheitssteuerung (10) in einer von der Sicherheitssteuerung (10) und den Sensoren (20) und/oder Aktoren (24) gebildeten Anlage umgesetzt und das so entstandene Programm auf die zentrale Steuerung (14) der Sicherheitssteuerung (10) überspielt wird.

3. Verfahren nach Anspruch 1 oder 2,
wobei ausgewählte Elemente zunächst in einem Zwischenbereich (106) abgelegt werden und dann durch Aufruf einer Zuordnungsfunktion automatisch sämtlichen von den in dem Zwischenbereich (106) abgelegten Elementen repräsentierten Sensoren (20) und/oder Aktoren (24) Eingänge (18) und/oder Ausgänge (22) geeigneter Anschlussmodule (16) zugeordnet werden.

4. Verfahren nach einem der vorhergehenden Ansprüche,
wobei Eigenschaften, welche zu neuen Elementen für die spätere Zuweisung festgelegt werden können, eine oder mehrere der Folgenden umfassen: Typbezeichnung, insbesondere Bestellnummer, Name, Hersteller; Anzahl der Anschlussklemmen; Art der Anschlüsse, insbesondere digital oder analog, einkanalig oder zweikanalig; Art des Signals, insbesondere antivalent, entgegengesetzt oder äquivalent, elektrische Größen wie Strom, Spannung, Kapazität; Kommunikationsprotokoll, insbesondere Art des Signals, Eingangs- und Ausgangsverzögerung, Diskrepanzzeit; physische Eigenschaften der Anschlüsse, insbesondere Drahtdurchmesser oder Steckertyp; Testmöglichkeiten, insbesondere Testsignale, Testdauer, Testzeitpunkt, erwartete Ausgaben bei einem Test, Dauer und Zeitpunkt der Testung.

5. Verfahren nach einem der vorhergehenden Ansprüche,
wobei die Repräsentation neuer Elemente in der grafischen Benutzeroberfläche editierbar ist, insbesondere Name, Symbol, Anordnung in der Anzeige (100) oder Anordnung in einem Menübaum.

6. Verfahren nach einem der vorhergehenden Ansprüche,
wobei neue Elemente auf einem oder mehreren Grundelementen basieren, und wobei die Festlegung, welche Eigenschaften den neuen Elementen zugewiesen werden können, durch Übernahme eines oder Auswahl aus einem globalen oder von den Grundelementen geerbten Katalog vorgenommen wird.

7. Verfahren nach Anspruch 6,
wobei die ausgewählten oder geerbten Eigenschaften bei der Festlegung angepasst werden, indem für die spätere Auswahl Voreinstellungen, Wertbereiche, zusätzliche Einstellmöglichkeiten und/oder reduzierte Einstellmöglichkeiten vorgegeben werden.

8. Verfahren nach einem der vorhergehenden Ansprüche,
wobei nach der Festlegung, welche Eigenschaften den neuen Elementen zugewiesen werden können, überprüft wird, ob das neue Element ein sicheres Element ist, insbesondere ob das neue Element unabhängig von der späteren Zuweisung von Eigenschaften schon durch die Festlegung sicher ist.

9. Vorrichtung zum Programmieren und/oder Konfigurieren einer Sicherheitssteuerung mit einem Verfahren nach einem der Ansprüche 1 bis 8, wobei die Vorrichtung eine Auswertungseinheit, ein Display für die grafische Benutzeroberfläche und eine Eingabeeinrichtung für deren Benutzung aufweist, insbesondere die Vorrichtung Teil der Sicherheitssteuerung ist.

10. Computerprogrammprodukt mit einer Speichereinrichtung, welche Programmcode zum Durchführen eines Verfahrens nach einem der Ansprüche 1 bis 9 hält, wenn der Programmcode auf einem Computer ausgeführt wird.
